# EUROPEAN PATENT APPLICATION

(11) **EP 4 678 139 A1**
(43) Date of publication of application: **14.01.2026**
(21) Application number: 24767354.4
(22) Date of filing: 29.02.2024
(51) Int. Cl.: A61C 8/00

(54) **ABUTMENT FOR DENTAL IMPLANT**

(30) Priority: 03.03.2023 KR 20230028680
(71) Applicant: Denflex Co., Ltd., Seoul 08381 (KR)
(72) Inventor: KIM, Hyung-Woo, Goyang-si Gyeonggi-do 10374 (KR)
(74) Representative: Lermer, Christoph
(86) International application number: PCT/KR2024/002679
(87) International publication number: WO 2024/186065

(57) **Abstract**

Proposed is an abutment for a dental implant coupled to a fixture for a dental implant implanted in the alveolar bone, and the abutment for a dental implant includes an inner coffin which has a first end coupled to the fixture and has an axial hole formed to extend downward from an upper end surface of a second end thereof, an outer coffin coupled to an outer surface of an upper portion of the inner coffin, and an occlusal force buffer which is provided with an occlusal force buffering portion along a longitudinal direction thereof, and is inserted through an axial opening formed on an upper end surface of the outer coffin to be disposed within the axial hole of the inner coffin.

## Description

### Technical Field

The present disclosure relates to an abutment for a dental implant and, more particularly, to an abutment for a dental implant having an improved structure capable of effectively buffering a vertical or lateral occlusal force transmitted from a prosthesis coupled to the upper portion of the abutment during mastication.

### Background Art

In general, a dental implant is a substitute for a lost natural tooth and involves implanting a fixture into the alveolar bone and allowing the fixture to fuse with the bone over a predetermined period, and then fixing an abutment and a prosthesis such as an artificial tooth onto the fixture so as to restore the original function of the tooth.

A conventional general dental implant includes a fixture having threads formed on an outer circumferential surface thereof so that the fixture is implanted into the alveolar bone, and an axial hole formed along a vertical central axis thereof, an abutment having a lower portion inserted into the axial hole of the fixture and an upper portion to which a prosthesis is attached, and a fixing screw that fastens and fixes securely the fixture and the abutment.

In a conventional dental implant, an abutment is firmly coupled to the fixture by means of a fixing screw. However, such a dental implant has limitation in that it cannot reproduce the unique movement and function of a natural tooth. For example, the dental implant entirely lacks an occlusal force buffering function performed by the periodontal ligament surrounding a natural tooth in response to an occlusal force transmitted during mastication.

Therefore, in the case of the conventional dental implant, during mastication, particularly when masticatory pressure is applied to food located between an implant and a natural tooth, the implant remains in place without the buffering effect of the masticatory pressure, so the masticatory pressure is mostly transmitted to an adjacent natural tooth, leading to a phenomenon in which the movement of the natural tooth is further accelerated compared to a dentition composed entirely of natural teeth and further causing the problem of increased food impaction between the implant and the adjacent natural tooth. In addition, the conventional dental implant entirely lacks an occlusal force buffering function, so a vertical or lateral occlusal force is directly transmitted to the prosthesis, the fixture, or the fixing screw, which may lead to fracture of the prosthesis, the fixture, or the fixing screw. Meanwhile, since the conventional dental implant lacks the occlusal force buffering function, there is a problem in that a relatively thick and long fixture must be used so that the fixture implanted in the alveolar bone can sufficiently support occlusal force directly transmitted from the prosthesis. In addition, due to the absence of the occlusal force buffering function, the conventional dental implant also has the issue of transmitting excessive force to an opposing tooth (i.e., a tooth located to directly collide with the implant) during mastication.

### Disclosure

### Technical Problem

The objective of the present disclosure is to provide an abutment for a dental implant that, by having an occlusal force buffering function within a structure thereof, can reduce the occurrence of food impaction between the implant and adjacent natural teeth, reduce the fracture of a prosthesis, a fixture, or a fixing screw, reduce a need to use a relatively thick and long fixture, enable the reproduction of the unique movement and buffering function of natural teeth, thereby making a bridge with natural teeth possible, reduce stress caused by tight contact with adjacent teeth when mounting the implant prosthesis, and prevent excessive force from being applied to an opposing tooth during mastication.

### Technical Solution

In an embodiment of the present disclosure to accomplish the above objectives, an abutment for a dental implant coupled to a fixture for a dental implant implanted in an alveolar bone, the abutment including: an inner coffin which has a first end coupled to the fixture and has an axial hole formed to extend downward from an upper end surface of a second end thereof; an outer coffin coupled to an outer surface of an upper portion of the inner coffin; and an occlusal force buffer which is provided with an occlusal force buffering portion along a longitudinal direction thereof, and is inserted through an axial opening formed on an upper end surface of the outer coffin to be disposed within the axial hole of the inner coffin.

Preferably, a slit portion formed through the outer surface of the inner coffin to the axial hole may be formed to extend continuously over a predetermined section from the upper end of the inner coffin.

Preferably, the slit portion may include a plurality of slit portions formed helically over a predetermined section.

Preferably, a free end portion of an upper end of a plurality of segments formed by the plurality of slit portions may be elastically deformable, and a fastening protrusion portion protruding outward more than an outer diameter directly below may be provided on an outer surface of the upper end of the plurality of segments.

Preferably, the fastening protrusion portion may be formed on the outer surface of the upper end of the plurality of segments of the inner coffin, and a corresponding fastening groove portion may be formed on an inner surface of an upper portion of the axial opening of the outer coffin, so that the outer coffin may be coupled to the outer surface of the upper portion of the inner coffin through elastic coupling of the fastening protrusion portion to the corresponding fastening groove portion via the elastic deformation, and as a result, a vertical or lateral occlusal force transmitted through the outer coffin may be buffered by an elastic coupling structure between the inner coffin and the outer coffin or by a slit portion structure formed in the inner coffin.

Preferably, the occlusal force buffer may include a head portion having a polygonal recessed groove formed on an upper end surface thereof, and a body portion having the occlusal force buffering portion formed below the head portion, wherein the occlusal force buffering portion may be formed as a slit portion in the longitudinal direction of the body portion.

Preferably, the slit portion in the longitudinal direction may be formed as a helical slit portion structure over a predetermined section so as to form the body portion into a plurality of helical segments.

Preferably, threads may be formed on an outer surface of an upper portion of the occlusal force buffer, and corresponding threads may be formed on an inner surface of an upper portion of the axial opening of the outer coffin, so that the upper portion of the occlusal force buffer and the upper portion of the outer coffin may be maintained to be coupled by threaded engagement, and as a result, a vertical or lateral occlusal force transmitted through the outer coffin may be buffered by the occlusal force buffering portion formed in the occlusal force buffer.

Preferably, when the occlusal force buffer is coupled to the outer coffin, the upper portion of the occlusal force buffer may restrict or inhibit inward movement of a fastening protrusion portion of the inner coffin toward a vertical central axis, and as a result, prevent the outer coffin from being detached or disassembled from the inner coffin.

Preferably, the corresponding threads formed on the inner surface of the upper portion of the axial opening of the outer coffin may be formed in a direction opposite to corresponding threads formed on an inner surface of an axial hole of the fixture.

Preferably, a fastening position-specifying recess portion which is inwardly recessed may additionally be formed on an inner surface of the axial opening of the outer coffin and specify and guide a fastening position of the outer coffin with respect to the inner coffin.

### Advantageous Effects

The abutment for a dental implant according to the present disclosure includes a structure in which the fastening protrusion portion formed on the outer surface of the upper end of the inner coffin is elastically engaged with the corresponding fastening groove portion formed on the inner surface of the upper portion of the axial opening of the outer coffin, a structure in which the slit portion formed through the outer surface of the inner coffin to the axial hole is formed helically over a predetermined section from the upper end of the inner coffin, and a structure in which the occlusal force buffer having the occlusal force buffering portion in the longitudinal direction is disposed within the axial hole of the inner coffin, whereby a vertical or lateral occlusal force transmitted during mastication can be effectively buffered, and as a result, a placed implant can substantially reproduce the unique movement and function of a natural tooth.

Accordingly, according to the present disclosure, it is possible to reduce food impaction between the implant and adjacent natural teeth, to decrease fracture of a prosthesis, a fixture, or a fixing screw, to reduce the need for a relatively thick and long fixture, to reduce excessive force transmission to opposing teeth during mastication, to make a bridge with natural teeth through reproduction of unique movement and buffering function similar to natural teeth, and to reduce stress generated due to tight contact with adjacent teeth when mounting a prosthesis on the implant.

### Description of Drawings

FIG. 1 is a perspective view of a dental implant according to an embodiment of the present disclosure.
FIG. 2 is a sectional view of the dental implant according to the embodiment of the present disclosure.
FIG. 3 is an exploded perspective view of the dental implant according to the embodiment of the present disclosure.
FIG. 4 is an exploded sectional perspective view of the dental implant according to the embodiment of the present disclosure.
FIGS. 5(a) to 5(c) are sectional views sequentially illustrating an example of a process of coupling an abutment for the dental implant according to the embodiment of the present disclosure to a fixture.
FIG. 6(a) is a sectional view illustrating the coupling of a dental implant according to another embodiment of the present disclosure, and FIG. 6(b) is a sectional view illustrating the coupling of a dental implant according to yet another embodiment of the present disclosure.

### Mode for Invention

Hereinafter, preferred embodiments of the present disclosure will be described in detail with reference to the drawings.

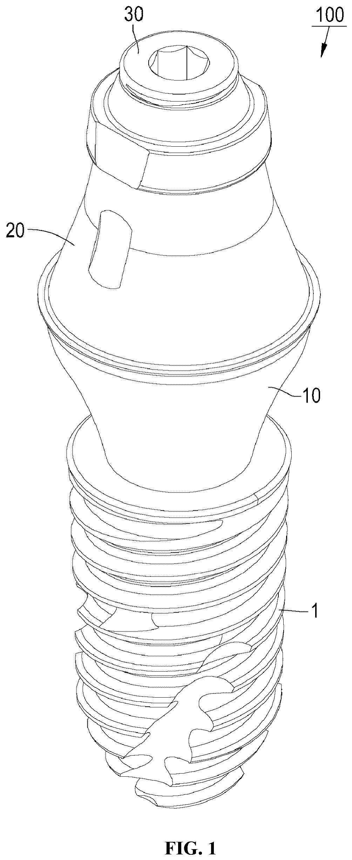

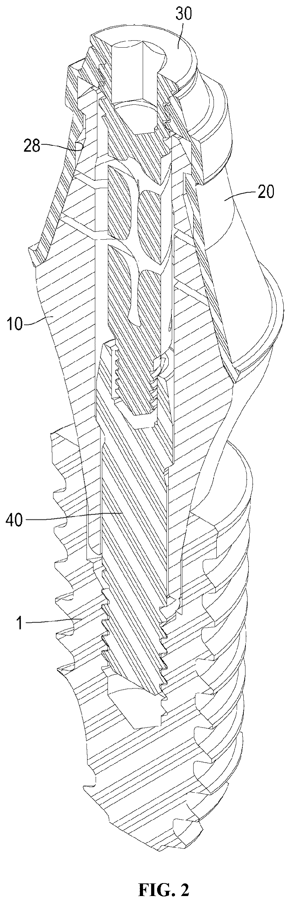

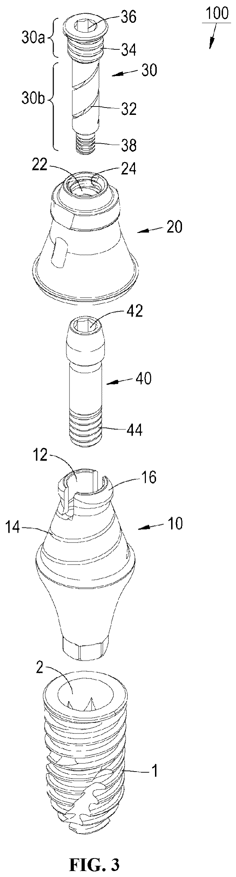

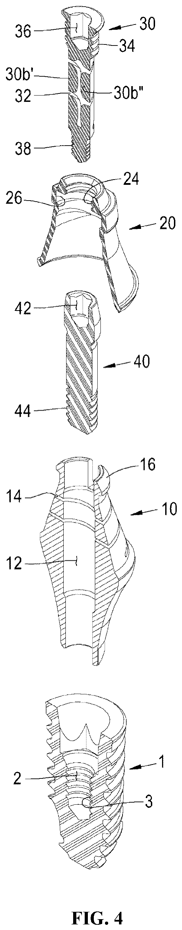

FIG. 1 is a perspective view of a dental implant according to an embodiment of the present disclosure, FIG. 2 is a sectional view of the dental implant according to the embodiment of the present disclosure, FIG. 3 is an exploded perspective view of the dental implant according to the embodiment of the present disclosure, and FIG. 4 is an exploded sectional perspective view of the dental implant according to the embodiment of the present disclosure.

As illustrated in FIGS. 1 and 2, an abutment 100 for a dental implant according to an embodiment of the present disclosure is coupled to a fixture 1 that can be implanted into the alveolar bone. With reference to FIGS. 1 to 4, the abutment 100 for a dental implant according to the embodiment of the present disclosure includes an inner coffin 10 which has a first end coupled to the fixture 1 and has an axial hole 12 formed to extend downward from an upper end surface of a second end thereof, an outer coffin 20 coupled to an outer surface of an upper portion of the inner coffin 10, and an occlusal force buffer 30 which is provided with an occlusal force buffering portion 32 along a longitudinal direction thereof, and is inserted through an axial opening 22 formed on an upper end surface of the outer coffin 20 to be disposed within the axial hole 12 of the inner coffin 10.

Referring to FIGS. 2 and 3, the inner coffin 10 is coupled to the fixture 1 by a fastening member 40 that is inserted through the axial hole 12 formed in the inner coffin 10. As illustrated in FIG. 3, in the inner coffin 10, a slit portion 14 formed through the outer surface of the inner coffin 10 to the axial hole 12 is formed to extend continuously over a predetermined section from the upper end of the inner coffin 10. Preferably, as illustrated in FIGS. 3 and 4, the slit portion 14 includes at least one slit portion formed in a helical shape over the predetermined section. Preferably, the slit portion 14 may include a plurality of slit portions formed helically. With the helical slit portion structure formed in the inner coffin 10, a vertical or lateral occlusal force transmitted through the outer coffin 20 (and a prosthesis coupled to the outer coffin 20) may be buffered.

Referring to FIG. 3, in the inner coffin 10, a free end portion of an upper end of a plurality of segments formed by the slit portions 14 is elastically deformable, and a fastening protrusion portion 16 protruding outward more than an outer diameter directly below is provided on the outer surface of the upper end of the plurality of segments.

Referring to FIG. 4, the fastening protrusion portion 16 is formed on the outer surface of the upper end of the plurality of segments of the inner coffin 10, and a corresponding fastening groove portion 26 is formed on the inner surface of the upper portion of the outer coffin 20. The fastening protrusion portion 16 of the inner coffin 10 is elastically coupled to the corresponding fastening groove portion 26 of the outer coffin 20 by elastic deformation of the fastening protrusion portion 16, so that the outer coffin 20 may be coupled to the outer surface of the upper portion of the inner coffin 10. By this coupling structure, vertical or lateral occlusal force transmitted through the outer coffin 20 (and the prosthesis coupled to the outer coffin 20) may be buffered. In this way, the outer coffin 20 is coupled to the outer surface of the upper portion of the inner coffin 10 by the elastic coupling. As illustrated in FIGS. 3 and 4, the axial opening 22 is formed on the upper end surface of the outer coffin 20.

Referring to FIGS. 3 and 4, the occlusal force buffer 30 includes a head portion 30a having a polygonal recessed groove 36 formed on an upper end surface thereof and threads 34 formed on an outer surface of an upper portion thereof, and a body portion 30b having the occlusal force buffering portion 32 formed below the head portion 30a. In some cases, threads may be formed in the recessed groove 36. As illustrated in FIGS. 3 and 4, the occlusal force buffering portion 32 is configured as a longitudinal helical slit portion structure formed in the body portion 30b, thereby forming the body portion 30b into a plurality of helical segments 30b' and 30b". In this way, a vertical or lateral occlusal force transmitted through the outer coffin 20 (and the prosthesis coupled to the outer coffin 20) may be buffered by the occlusal force buffering portion 32 (e.g., the helical slit portion structure) formed in the body portion 30b of the occlusal force buffer 30. Preferably, the slit portion of the occlusal force buffering portion 32 may, in some cases, be formed to be continuous to the lower end thereof.

Referring to FIGS. 3 and 4, threads 34 are formed on the outer surface of the upper portion of the occlusal force buffer 30, and corresponding threads 24 are formed on the inner surface of the upper portion of the axial opening 22 of the outer coffin 20, so that the upper portion of the occlusal force buffer 30 and the upper portion of the outer coffin 20 may be maintained to be coupled by thread engagement. Accordingly, a vertical or lateral occlusal force transmitted through the outer coffin (and the prosthesis coupled to the outer coffin 20) may be buffered by the occlusal force buffering portion 32 of the occlusal force buffer 30 thread-engaged with the outer coffin 20. Preferably, the corresponding threads 24 formed on the inner surface of the upper portion of the axial opening 22 of the outer coffin 20 may be formed in a direction opposite to corresponding threads 3 formed on the inner surface of an axial hole 2 of the fixture 1. This is to prevent loosening of the fastening member 40 that fixedly couples the fixture 1 and the inner coffin 10.

Referring to FIG. 2, when the occlusal force buffer 30 is coupled to the outer coffin 20, it is preferable that the upper portion of the occlusal force buffer 30 has a sufficient diameter to restrict or inhibit the fastening protrusion portion 16 of the inner coffin 10 from moving inward toward the vertical central axis, thereby preventing the outer coffin 20 from being detached or disassembled from the inner coffin 10.

Referring to FIG. 3, an end portion of the lower portion of the occlusal force buffer 30 is seated and supported by corresponding to a recess portion 42 formed on the upper surface of the head portion of the fastening member 40, and as a result, a vertical or lateral occlusal force transmitted through the outer coffin (and the prosthesis coupled to the outer coffin 20) is sufficiently buffered by the occlusal force buffering portion 32 of the occlusal force buffer 30, and then is transmitted to the fixture 1 through the fastening member 40.

Referring to FIG. 3, a fastening portion 38 formed as threads on the end portion of the lower portion of the occlusal force buffer 30 is fastened to corresponding threads formed in the recess portion 42 of the fastening member 40, thereby preventing loosening. This also ensures a reliable fixing force and elastic support of the occlusal force buffer 30 with respect to the fastening member 40, thereby functioning to buffer a vertical or lateral occlusal force.

In addition, in some cases, instead of the threads formed on the outer surface of the upper portion of the occlusal force buffer 30, a tapered surface may be formed thereon. In addition, in some cases, a shape such as threads or a polygon may be formed on the end portion of the lower portion of the occlusal force buffer 30, and with the lower end portion seated in the recess portion 42 of the upper end of the fastening member 40, a gap between the lower end portion and the recess portion of the fastening member 40 may be filled by an adhesive or the like to couple the lower end portion and the recess portion. As a result, this may prevent loosening of the fastening member 40, or, with the lower end portion of the occlusal force buffer 30 fixed in the recess portion 42 of the fastening member 40, the upper portion of the occlusal force buffer 30 may have elastic movement (deformation), thereby functioning to more reliably buffer a vertical or lateral occlusal force.

Referring to FIGS. 2 and 3, a fastening position-specifying recess portion 28 which is inwardly recessed is additionally formed on the inner surface of the upper portion of the axial opening of the outer coffin 20, thereby functioning to specify and guide the fastening position of the outer coffin 20 with respect to the inner coffin 10. That is, when coupling the outer coffin 20 to the inner coffin 10, the outer coffin 20 is brought into closer contact with the outer surface of the inner coffin 10 only at a rotational position previously specified by the fastening position-specifying recess portion 28, and then when pressure is applied to the outer coffin 20 toward the inner coffin 10 at that position, the outer coffin 20 may be elastically coupled to the inner coffin 10. Referring to FIGS. 1 to 3, a flat surface or a recess portion may additionally be formed on a predetermined portion of the outer surface of the outer coffin 20.

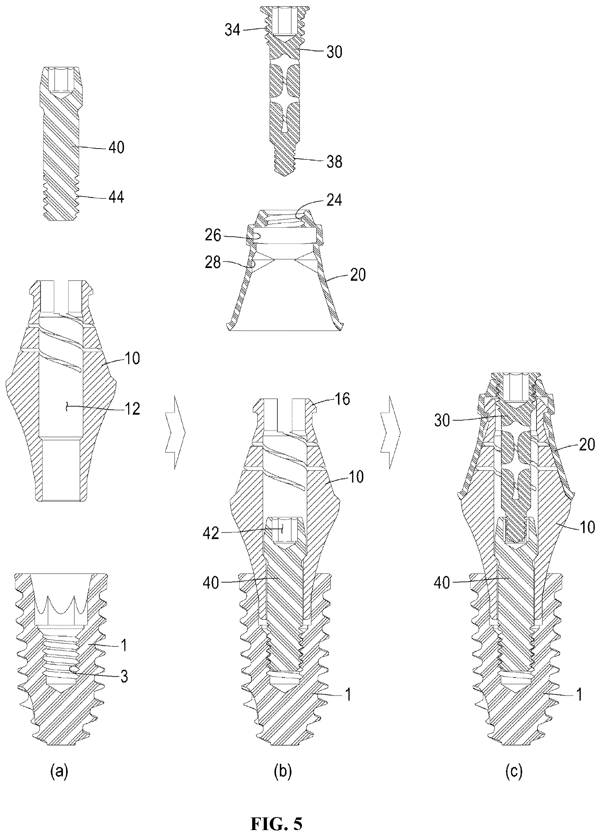

FIGS. 5(a) to 5(c) are sectional views sequentially illustrating an example of the process of coupling the abutment for a dental implant according to the embodiment of the present disclosure to the fixture.

First, as illustrated in FIG. 5(a), the inner coffin 10 is fixed to the fixture 1 implanted in the alveolar bone by using the fastening member 40. Next, as illustrated in FIG. 5(b), when the outer coffin 20 is seated on the outer surface of the upper portion of the inner coffin 10 and then gently rotated, the outer coffin 20 comes into closer contact with the inner coffin 10 at a rotational position previously specified by the fastening position-specifying recess portion 28. In that state, when the outer coffin 20 is pressed vertically to the inner coffin 10, the fastening protrusion portion 16 of the inner coffin 10 is elastically deformed and elastically coupled to the fastening groove portion 26 of the outer coffin 20. Next, the occlusal force buffer 30 is inserted through the axial opening 22 formed on the upper end surface of the outer coffin 20 to engage threads 34 of the occlusal force buffer 30 with corresponding threads 24 of the outer coffin 20, and thus the occlusal force buffer 30 is disposed within the axial hole 12 of the inner coffin 10, as illustrated in FIG. 5(c). In this process, adhesive may additionally be applied to the end portion of the lower portion of the occlusal force buffer 30 before positioning the occlusal force buffer 30.

In another embodiment of the present disclosure, the outer coffin may be formed integrally with the prosthesis.

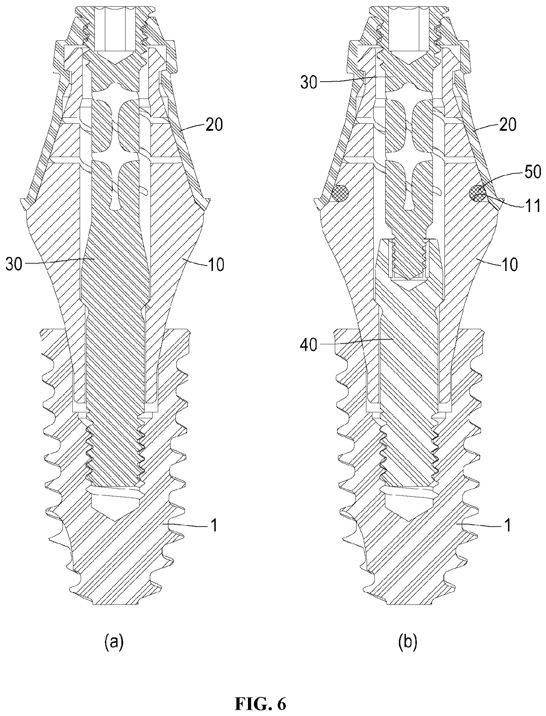

FIG. 6(a) is a sectional view illustrating the coupling of a dental implant according to another embodiment of the present disclosure, and FIG. 6(b) is a sectional view illustrating the coupling of a dental implant according to yet another embodiment of the present disclosure.

Referring to FIG. 6(a), in the occlusal force buffer 30 of a dental implant according to the another embodiment of the present disclosure, the overall length of the occlusal force buffer 30 is extended so that the threads formed on the lower end portion of the occlusal force buffer 30 may engage with the corresponding threads formed on the inner surface of the axial hole of the fixture, so he occlusal force buffer may also perform the function of the fastening member.

Referring to FIG. 6(b), on the outer surface of the inner coffin 10 of a dental implant according to yet another embodiment of the present disclosure, a sealing groove 11 may be additionally formed in the circumferential direction of the inner coffin 10. With a sealing ring inserted into the sealing groove 11, the inner coffin 10 is coupled to the outer coffin 20, so intrusion of foreign substances into the interior may be prevented in advance.

In yet another embodiment of the present disclosure, the inner coffin and the fastening member may be formed integrally, and in this case, the lower portion of the integral structure may be formed in a shape other than threads.

Although the present disclosure has been described in detail with reference to specific embodiments shown in the drawings, the present disclosure is not limited to specific structures. Those skilled in the art will be able to make various modifications or changes to the present disclosure without departing from the technical spirit and scope of the present disclosure as set forth in the claims below. It is, however, to be clearly understood in advance that such mere design modifications or structural variations are all encompassed within the scope of the present disclosure.

## Claims

1. An abutment for a dental implant coupled to a fixture for a dental implant implanted in an alveolar bone, the abutment comprising:
an inner coffin which has a first end coupled to the fixture and has an axial hole formed to extend downward from an upper end surface of a second end thereof;
an outer coffin coupled to an outer surface of an upper portion of the inner coffin; and
an occlusal force buffer which is provided with an occlusal force buffering portion along a longitudinal direction thereof, and is inserted through an axial opening formed on an upper end surface of the outer coffin to be disposed within the axial hole of the inner coffin.

2. The abutment of claim 1, wherein a slit portion formed through the outer surface of the inner coffin to the axial hole is formed to extend continuously over a predetermined section from the upper end of the inner coffin.

3. The abutment of claim 2, wherein the slit portion includes a plurality of slit portions formed helically over a predetermined section.

4. The abutment of claim 3, wherein a free end portion of an upper end of a plurality of segments formed by the plurality of slit portions is elastically deformable, and a fastening protrusion portion protruding outward more than an outer diameter directly below is provided on an outer surface of the upper end of the plurality of segments.

5. The abutment of claim 4, wherein the fastening protrusion portion is formed on the outer surface of the upper end of the plurality of segments of the inner coffin, and a corresponding fastening groove portion is formed on an inner surface of an upper portion of the axial opening of the outer coffin, so that the outer coffin is coupled to the outer surface of the upper portion of the inner coffin through elastic coupling of the fastening protrusion portion to the corresponding fastening groove portion via the elastic deformation, and as a result, a vertical or lateral occlusal force transmitted through the outer coffin is buffered by an elastic coupling structure between the inner coffin and the outer coffin or by a slit portion structure formed in the inner coffin.

6. The abutment of claim 1, wherein the occlusal force buffer includes a head portion having a polygonal recessed groove formed on an upper end surface thereof, and a body portion having the occlusal force buffering portion formed below the head portion, wherein the occlusal force buffering portion is formed as a slit portion in the longitudinal direction of the body portion.

7. The abutment of claim 6, wherein the slit portion in the longitudinal direction is formed as a helical slit portion structure over a predetermined section so as to form the body portion into a plurality of helical segments.

8. The abutment of claim 6, wherein threads are formed on an outer surface of an upper portion of the occlusal force buffer, and corresponding threads are formed on an inner surface of an upper portion of the axial opening of the outer coffin, so that the upper portion of the occlusal force buffer and the upper portion of the outer coffin are maintained to be coupled by threaded engagement, and as a result, a vertical or lateral occlusal force transmitted through the outer coffin is buffered by the occlusal force buffering portion formed in the occlusal force buffer.

9. The abutment of claim 8, wherein when the occlusal force buffer is coupled to the outer coffin, the upper portion of the occlusal force buffer restricts or inhibits inward movement of a fastening protrusion portion of the inner coffin toward a vertical central axis, and as a result, prevents the outer coffin from being detached or disassembled from the inner coffin.

10. The abutment of claim 9, wherein the corresponding threads formed on the inner surface of the upper portion of the axial opening of the outer coffin are formed in a direction opposite to corresponding threads formed on an inner surface of an axial hole of the fixture.

11. The abutment of claim 1, wherein a fastening position-specifying recess portion which is inwardly recessed is additionally formed on an inner surface of the axial opening of the outer coffin and specifies and guides a fastening position of the outer coffin with respect to the inner coffin.
